# EUROPÄISCHE PATENTSCHRIFT

(11) **EP 1 321 328 B1**
(45) Veröffentlichungstag und Bekanntmachung des Hinweises auf die Patenterteilung: **11.07.2007**
(21) Anmeldenummer: 02027809.9
(22) Anmeldetag: 12.12.2002
(51) Int. Cl.: B60K 17/34, B60K 17/22, B60K 17/344

(54) **Längs eingebauter Antriebsstrang für ein Kraftfahrzeug**
Longitudinally mounted driveline for motor vehicle
Train d'entraînement monté longitudinalement pour véhicule automobile

(30) Priorität: 18.12.2001 DE 10162337; 25.06.2002 EP 02014122
(43) Veröffentlichungstag der Anmeldung: 25.06.2003
(73) Patentinhaber: DaimlerChrysler AG, 70327 Stuttgart (DE)
(72) Erfinder: Gansloser, Philip, 73340 Amstetten (DE); Nied, Hartmut, 71336 Waiblingen (DE); Schröder, Rolf, 70619 Stuttgart (DE); Wörner, Günter, 71394 Kernen (DE)

(56) Entgegenhaltungen:
- US-A- 3 262 512
- US-A- 4 213 512
- US-A- 5 116 293

## Beschreibung

Die Erfindung betrifft gemäß Patentanspruch 1 einen längs eingebauten Antriebsstrang für ein Kraftfahrzeug, bei welchem die Seitenwelle winkelig angeordnet und zweiteilig ist.

Aus der DE 39 43 120 A1 ist bereits ein Allrad-Antriebsstrang mit einer Gelenkwelle bekannt. Die US-A-5 116 293 offenbart einen gattungsbildenden Antriebsstrang.

Aufgabe der Erfindung ist es, einen wirkungsgradoptimierten längs eingebauten Antriebsstrang für ein allradgetriebenes Kraftfahrzeug zu schaffen, der in einen schmalen Fahrzeugtunnel integrierbar und montagefreundlich ist.

Diese Aufgabe wird erfindungsgemäß durch die Merkmale des längs eingebauten Antriebsstranges von Patentanspruch 1 gelöst.

Die Erfindung betrifft einen Antriebsstrang für ein Kraftfahrzeug, der zusätzlich zu einem Antriebsmotor ein für einen Längseinbau vorgesehenes Kraftfahrzeuggetriebe mit einer im eingebauten Zustand zum Heck des Kraftfahrzeugs weisenden Getriebeausgangswelle aufweist, die über eine verschwenkt angeordnete Abtriebswelle eines Seitenabtriebs und über eine Seitenwelle antriebsmäßig mit einer Ritzelwelle eines Vorderachsgetriebes verbindbar ist. Dabei sind die beiden Wellenteile der Seitenwelle mittels einer als Keilwellenverzahnung ausgeführten Keilwellenverbindung miteinander verbunden. Die Teilung der Seitenwelle vereinfacht in vorteilhafter Weise den Ein-/Ausbau der gesamten Antriebsanordnung. Dabei kann der längseingebaute Allrad-Antriebsstrang eine "add-on"-Variante zu dem einfachen längseingebauten Antriebsstrang mit ausschließlichem Hinterachsantrieb bilden. Bei einer solchen "add-on"-Variante ist die Umrüstung von besagtem einfachen Antriebsstrang zum Allrad-Antriebsstrang besonders kostengünstig und es ist nur eine geringe Teilevielfalt notwendig.

Durch eine Axialsicherung wird im fertig montierten Zustand eine definierte Position der beiden Wellenteile zueinander sichergestellt. Relativbewegungen der beiden Wellenteile zueinander und die damit einhergehenden Auswirkungen
- Reibung,
- Verschleiß und
- Wirkungsgradverschlechterung
werden sicher ausgeschlossen oder werden beim Zulassen einer begrenzten axialen Verschiebbarkeit in Grenzen gehalten.

Die Erfindung zeichnet sich durch eine besonders montagefreundliche Ausgestaltung aus. Bestimmte Ausgestaltungen der Rastverbindung bieten den Vorteil einer Demontage ohne Werkzeug, da bei Überschreitung einer Demontagekraft die Verbindung gelöst wird. Eine solche Rastverbindung ist neben den bekannten Clipsverbindungen die Verbindung mit einem Axialsicherungsring DIN 9045.

Eine ineinander gesteckte und rastierte Verbindung weist beispielsweise gegenüber jeglichen Schraubverbindungen den Vorteil auf, dass der Drehmomentübertragung der Seitenwelle keine axialen Spannungen infolge der Verschraubung überlagert sind.

Die Erfindung sicht eine Ausgestaltung vor, bei welcher die Axialsicherung der Verbindung zwischen den beiden Wellenteilen außerhalb des Bereiches großer Spannungen infolge einer Drehmomentübertragung liegt. D.h., eine infolge einer Ringnut geschwächte Stelle der Seitenwelle liegt außerhalb des Kraftflusses. Somit entstehen keine Spannungsspitzen im Bereich der Axialsicherung und die Gelenkwelle wird nicht geschwächt.

Gegenüber Wellenverbindungen, wie beispielsweise Flanschverbindungen hat die beanspruchte Keilwellenverbindung den Vorteil einer geringeren radialen Ausdehnung. Durch diese geringe radiale Ausdehnung kann die Welle sehr nahe an der Antriebseinheit vorbei geführt werden. Dadurch wird nur ein geringer Bauraum benötigt, was neben den generellen Bauraumvorteilen insbesondere bei der "add-on"-Variante als längseingebauter Allrad-Antriebsstrang einen Vorteil mit sich bringt. Dieser Vorteil ist begründet im Bauraum für den Fahrzeugtunnel, in welchem das Getriebe untergebracht ist. Dieser Bauraum ist bei einer "add-on"-Variante mit Allrad-Antriebsstrang aus Gleichteilgründen der gleiche, wie bei besagtem einfachen Antriebsstrang mit Hinterachsantrieb. Bei dem erfindungsgemäßen Allrad-Antriebsstrang muss nun nicht unnötig viel Bauraum im Fahrzeugtunnel auch bei lediglich hinterachsgetriebenen Varianten im Fahrzeugtunnel vorgehalten werden. Durch die geringe radiale Ausdehung der Seitenwelle und die damit verbundene nahe Führung entlang dem Getriebe kann die Seitenwelle mit einem sehr geringen Winkel zur Antriebsstranglängsachse ausgeführt sein. Damit gehen Wirkungsgradvorteile einher.

Durch den geringen Winkel werden neben dem Einbauvorteil im Fahrzeugtunnel auch Wirkungsgradvorteile erzielt. Der Abstand zwischen der Seitenwelle und dem Getriebegehäuse wird damit in vorteilhafter Weise durch den dünnen Außendurchmesser der Seitenwelle bestimmt. Damit ist zuvor genannter Abstand in vorteilhafter Weise geringst möglich. In vorteilhafter Weise reicht der relativ kleine Fahrzeugtunnel eines hinterachsgetriebenen Kraftfahrzeuges auch für den allradantreibenden Antriebsstrang aus. Ferner können in vorteilhafter Weise die Stirnräder des Seitenabtriebes im Durchmesser klein dargestellt werden. Dadurch ist der Seitenabtrieb in vorteilhafter Weise kostengünstig und leicht.

Bei Verwendung einer Gelenkwelle für die Seitenwelle werden durch den geringen Winkel neben den vorgenannten Einbauvorteilen im Fahrzeugtunnel zusätzlich Wirkungsgradvorteile erzielt, da das Gelenk weniger mit Reibung belastet wird. Die Ausführung der Seitenwelle mit Gelenken hat generell den Vorteil, dass größere Distanzen von einem Wellenende zum anderen Wellenende überbrückt werden können. Damit kann die Vorderachse des Fahrzeuges sehr weit nach vorne geführt werden. Der sich somit ausbildende große Achsabstand zwischen Vorderachse und Hinterachse führt in vorteilhafter Weise zu einem guten Geradeauslauf und einer ruhigen Straßenlage.

Aber auch bei Seitenwellen ohne Gelenk, d.h. bei Seitenwellen, bei welchen deren Rotationsachse mit den Rotationsachsen des der beiden an den Enden der Seitenwelle drehfest angebrachten Zahnrädern fluchtet, ist der Einsatz der Erfindung vorteilhaft.

Der längseingebaute Antriebsstrang ist in vorteilhafter Weise montagefreundlich. Keilwellenverbindungen können problemlos als Steckverbindung ausgeführt werden. Diese Steckverbindungen sind besonders montagefreundlich, da die beiden zu verbindenden Wellenteile ohne zusätzliche fixierende Mittel zueinander positioniert werden können. Es sind sogar Ausgestaltungen der Steckverbindung möglich, bei denen auf zusätzliche fixierende Mittel vollkommen verzichtet werden kann. Auf solche zusätzlichen fixierenden Mittel, wie beispielsweise Schrauben, kann beispielsweise bei üblichen Flanschverbindung nicht verzichtet werden.

Besonders vorteilhaft kann die Steckverbindung eine Hohlwelle und eine weitere in diese hineinsteckbare Welle, welche beispielsweise als Vollwelle ausgeführt sein kann, aufweisen. Zur Einsparung von Gewicht kann es auch vorteilhaft sein, zwei Hohlwellen ineinander zu stecken. Die Verbindungsart unter Verwendung einer Hohlwelle bietet den Vorteil, dass Hohlwellen trotz geringem Gewicht große Drehmomente übertragen können. Vollwellen können hingegen in vorteilhafter Weise trotz geringer radialer Ausdehnung hohe Drehmomente übertragen.

Gemäß Patentanspruch 4 kann bei einer Seitenwelle wenigstens ein mit der Seitenwelle verbundenes Abtriebsritzel zur Getriebeausgangswelle des Kraftfahrzeuggetriebes verschwenkt sein. Damit gehen neben den genannten Einbauvorteilen auch Wirkungsgradvorteile insbesondere dann einher, wenn eine Gelenkwelle als Seitenwelle verwendet wird.

Die Weiterbildung des Antriebsstranges gemäß dem Patentanspruch 6, welcher einen bestimmten Achsenwinkel am Vorderachsgetriebe zum Gegenstand hat, geht mit Vorteilen der Verringerung der Baugröße und Wirkungsgradvorteilen einher, da in diesem Fall ein Gelenk der als Gelenkwelle ausgeführten Seitenwelle im Bereich des Vorderachsgetriebes entlastet wird bzw. auf das Gelenk verzichtet werden kann.

Patentanspruch 7 zeigt eine Ausgestaltung der Erfindung, welche ein ineinanderschieben der beiden zu verbindenden Wellenteile zulässt. In besonders vorteilhafter Weise ist bei der Keilwellenverzahnung eine hohe Drehmomentübertragung über eine große Fläche möglich.

Die Erfindung kann besonders vorteilhaft Anwendung finden bei einem Allrad-Antriebsstrang, dessen Seitenwelle eine Verbindung mit Zentrierung aufweist. Diese Verbindung kann eine zentrierte Flanschverbindung sein. Um diese Flanschverbindung bei der Demontage der Seitenwelle zu lösen, muss infolge der Zentrierung der eine Anschlussflansch axial vom anderen Anschlussflansch abgehoben werden. Dies ist jedoch nur möglich, wenn die Seitenwelle zumindest ein begrenztes Zusammenschieben erlaubt. Demzufolge ist die Verwendung der Erfindung bei einer Antriebsanordnung mit zumindest begrenzter Axialverschieblichkeit der Seitenwelleteile ineinander besonders vorteilhaft.

Die begrenzte Verschiebbarkeit der beiden Seitenwellenteile ineinander kann besonders vorteilhaft erreicht werden, indem die beiden Seitenwellenteile axiales Spiel zueinander aufweisen. Es sind aber auch axial stauchbare elastische Gummi-, Silikon-, Tellerfeder- oder Schraubendruckfederbauteile denkbar.

Eine Weiterentwicklung des vorgenannten Gegenstandes ist eine zentrierte Flanschverbindung deren einer Anschlussflansch mit einem Gelenk einer als Gelenkwelle ausgeführten Seitenwelle und deren anderer Anschlussflansch mit der Ritzelwelle des Vorderachsgetriebes verbunden ist. Wenn dieser Antriebsstrang demontiert werden muss, so muss eine Verbindung zwischen der Gelenkwelle und einer Ritzelwelle des Vorderachsgetriebes gelöst werden.

Weitere Vorteile der Erfindung gehen aus den weiteren Patentansprüchen, der Beschreibung und der Zeichnung vor.

Die Erfindung ist nachfolgend anhand von vier schematischen und zwei detaillierten Ausführungsbeispielen in der Zeichnung erläutert.

Dabei zeigen:
- Fig. 1 bis Fig. 4: in vier alternativen Ausführungsbeispielen in einem Teilbereich eine schematische Darstellung eines längseingebauten Allrad-Antriebsstrangs für ein Kraftfahrzeug,
- Fig. 5: eine Draufsicht auf einen Teilbereich des Allradantriebsstranges aus Fig. 3,
- Fig. 6: in einer ersten detaillierten Ausgestaltungsform den Allrad-Antriebsstrang gemäß Fig. 3 und
- Fig. 7: in einer zweiten detaillierten Ausgestaltungsform den Allrad-Antriebsstrang gemäß Fig.3, der aber nicht zur Erfindung gehört.

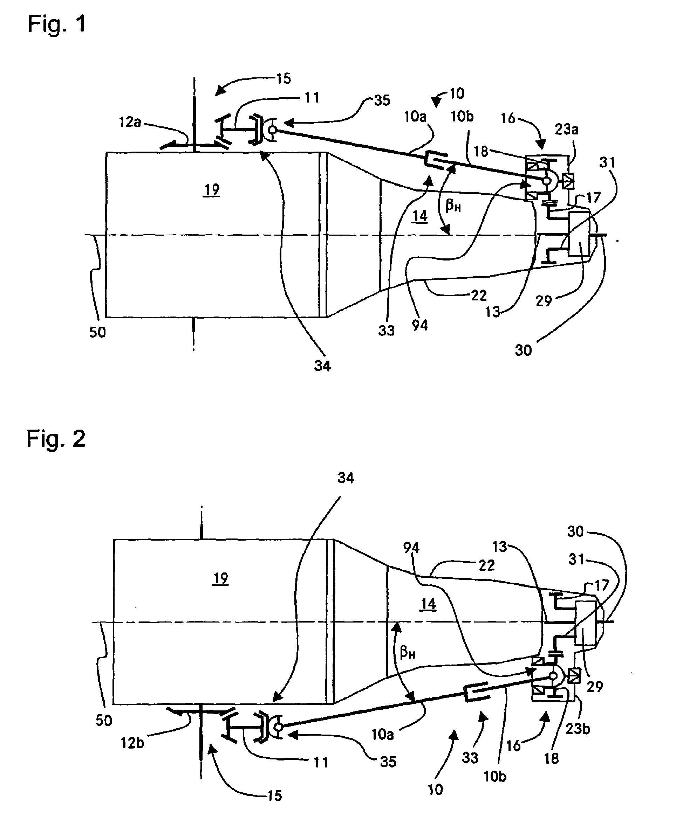

Im folgenden werden die Gemeinsamkeiten der alternativen vier Ausführungsbeispiele gemäß Fig. 1 bis Fig. 4 dargestellt.

Fig. 1 bis Fig. 4 zeigen jeweils in einem Teilbereich eine schematische Darstellung eines längseingebauten Allrad-Antriebsstrangs für ein Kraftfahrzeug, der einen Antriebsmotor 19 und ein Automatikgetriebe 14 mit einer im eingebauten Zustand zum Heck des Kraftfahrzeugs weisenden Getriebeausgangswelle 13 aufweist. Der Antriebsstrang ist im wesentlichen entlang einer Antriebsstranglängsachse 50 ausgerichtet.

Das Automatikgetriebe 14 ist grundsätzlich für einen reinen Heckantrieb konzipiert. Die Getriebeausgangswelle 13 ist im eingebauten Zustand des Automatikgetriebes 14 mit einer nicht näher dargestellten Eingangswelle eines Hinterachsgetriebes antriebsmäßig verbunden.

Das Automatikgetriebe 14 besitzt ein Getriebegehäuse 22 mit einem angeformten Lagergehäuse 23a bzw. 23b bzw. 23c bzw. 23d für einen Seitenabtrieb 16, so dass das Automatikgetriebe 14 kostengünstig nach einem sogenannten "add-on-Prinzip" für eine Allradvariante nutzbar ist.

Bei einer derartigen Variante ist die gegenüber der reinen Heckantriebsvariante verlängerte Getriebeausgangswelle 13 über ein Verteilergetriebe 29 und eine Heckantriebsgelenkwelle 30 mit der Ritzelwelle des Hinterachsgetriebes derart verbunden, dass ein erster Teil des Antriebsmomentes auf das Hinterachsgetriebe übertragen wird. Ein zweiter Teil des Antriebsmomentes wird von der Getriebeausgangswelle 13 über
- das Verteilergetriebe 29,
- ein Antriebsritzel 17,
- eine zweigeteilte Seitenwelle des Seitenabtriebs 16 und
- eine Kegelritzelwelle 11 eines Vorderachsgetriebes 15 auf eine Vorderachse übertragen. Mittels des Verteilergetriebes 29 sind Abtriebsmomente auf das Vorderachsgetriebe 15 und das Hinterachsgetriebe verteilbar sowie Drehzahldifferenzen ausgleichbar. Die Seitenwelle ist als Gelenkwelle 10 ausgeführt.

Die zweigeteilte Gelenkwelle 10 umfasst ein erstes Seitenwellenteil 10a und ein zweites Seitenwellenteil 10b, die beide mittels einer begrenzt axialverschieblichen Verbindung 33 drehfest miteinander verbunden sind. Die Gelenkwelle 10 ist horizontal um einen Winkel von ca. 8° zur Getriebeausgangswelle 13 verschwenkt, und zwar jeweils in Richtung zur Kegelritzelwelle 11 des Vorderachsgetriebes 15. Die Gelenkwelle 10 des Seitenabtriebs 16 ist vertikal um einen Winkel von ca. 4° zur Getriebeausgangswelle 13 verschwenkt, und zwar in Richtung zur Kegelritzelwelle 11 des Vorderachsgetriebes 15. Dabei ist in der Zeichnung nur der Winkel β_{H} in der Horizontalen ersichtlich.

Der Seitenabtrieb 16 wird von zwei Zahnrädern gebildet, und zwar von einem Antriebsritzel 17, und einem mit diesem kämmenden Abtriebsritzel 18. Das Antriebsritzel 17 ist mittels einer Hohlwelle 31 mit einem Getriebeglied des Verteilergetriebes 29 drehfest verbunden. Innerhalb dieser Hohlwelle 31 verläuft die Getriebeausgangswelle 13. Das Abtriebsritzel 18 ist mittels einer angestellten Kegelrollenlagerung in x-Anordnung in dem Lagergehäuse 23a bzw. 23b bzw. 23c bzw. 23d gelagert.

Zur Herstellung des horizontalen Winkels β_{H} und des nicht näher dargestellten vertikalen Winkels ist das hintere Ende des zweiten Seitenwellenteils 10b mittels eines Kreuzgelenkes 94 gelenkig radial innerhalb des Abtriebsritzels 18 angeordnet. Das erste Seitenwellenteil 10a ist an dessen anderem - d.h. vorderem - Ende über eine zentrierte Flanschverbindung 34 mit einem weiteren Kreuzgelenk 35 gelenkig an die Kegelritzelwelle 11 gekoppelt. Demzufolge ist eine vordere Gelenkhälfte des Kreuzgelenkes 35 mit dem einen Anschlußflansch der Flanschverbindung 34 und die Kegelritzelwelle 11 mit dem anderen Anschlußflansch der Flanschverbindung 34 verbunden. Infolge einer Zentrierung der Flanschverbindung 34 muss das erste Seitenwellenteil 10a nach dem Lösen von Verbindungsschrauben der Flanschverbindung 34 nach hinten gezogen werden. Die dabei zwangsläufige Verkürzung der Gelenkwelle 10 wird durch Axialverschieblichkeit der Verbindung 33 ermöglicht. Dazu weisen die beiden Seitenwellenteile 10a und 10b im Bereich der Verbindung 33 ein axiales Spiel zueinander auf.

Bei dem Antriebsstrang gemäß Fig. 1 sind das Antriebsritzel 17 und das mit diesem kämmende Abtriebsritzel 18 jeweils als Stirnrad ausgeführt. Die Gelenkwelle 10 ist auf der in Fahrtrichtung rechts liegenden Seite des Antriebsmotors 19 angeordnet. Ein Tellerrad 12a des Vorderachsgetriebes 15 ist auf der dem Antriebsmotor 19 zugewandten - d.h. der in Fahrtrichtung linken - Seite des Vorderachsgetriebes 15 angeordnet.

Bei dem Antriebsstrang gemäß Fig. 2 sind das Antriebsritzel 17 und das mit diesem kämmende Abtriebsritzel 18 jeweils als Stirnrad ausgeführt. Die Gelenkwelle 10 ist auf der in Fahrtrichtung links liegenden Seite des Antriebsmotors 19 angeordnet. Ein Tellerrad 12b des Vorderachsgetriebes 15 ist auf der dem Antriebsmotor 19 zugewandten - d.h. der in Fahrtrichtung rechten - Seite des Vorderachsgetriebes 15 angeordnet.

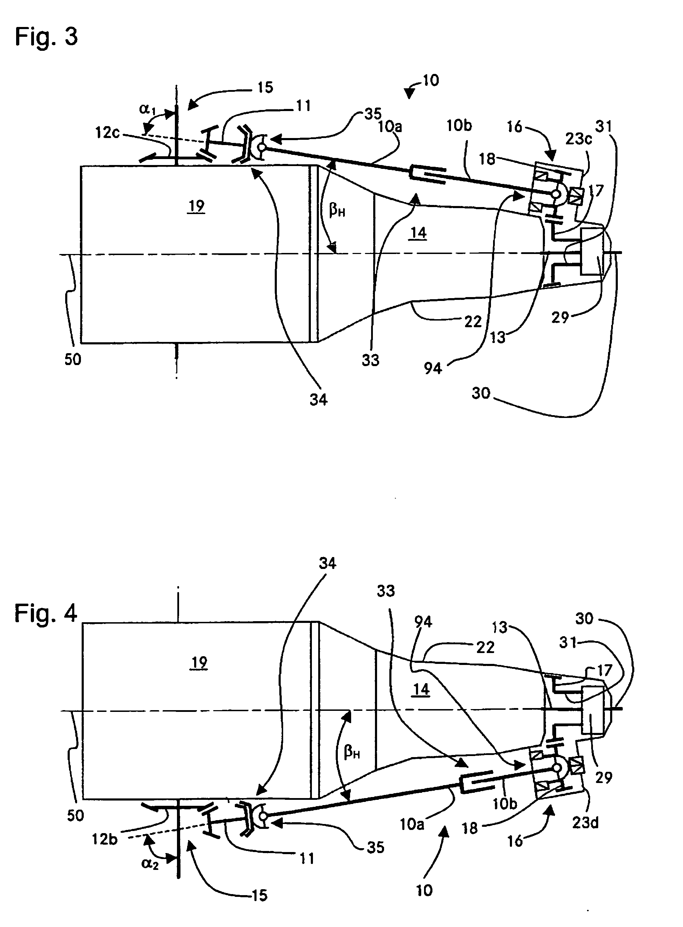

Bei dem Antriebsstrang gemäß Fig. 3 sind das Antriebsritzel 17 und das mit diesem kämmende Abtriebsritzel 18 jeweils als kegeliges Stirnrad ausgeführt. Ein Achsenwinkel dieser kegeligen Stirnräder ist dabei gleich dem horizontalen Winkel β_{H}. Ferner ist ein Achsenwinkel α₁ eines Tellerrades 12c und der Kegelritzelwelle 11 um den Winkel β_{H} kleiner als 90°, so dass die Kegelritzelwelle 12c und die Gelenkwelle 10 in einer gemeinsamen vertikalen Ebene liegen. Die Gelenkwelle 10 ist auf der in Fahrtrichtung rechts liegenden Seite des Antriebsmotors 19 angeordnet. Das Tellerrad 12c des Vorderachsgetriebes 15 ist auf der dem Antriebsmotor 19 zugewandten - d.h. der in Fahrtrichtung linken - Seite des Vorderachsgetriebes 15 angeordnet.

Bei dem Antriebsstrang gemäß Fig. 4 sind das Antriebsritzel 17 und das mit diesem kämmende Abtriebsritzel 18 jeweils als kegeliges Stirnrad ausgeführt. Ein Achsenwinkel dieser kegeligen Stirnräder ist dabei gleich dem horizontalen Winkel β_{H}. Ferner ist ein Achsenwinkel α₂ zwischen einem Tellerrad 12d und der Kegelritzelwelle 11 um den Winkel β_{H} kleiner als 90°, so dass die Kegelritzelwelle 12d und die Gelenkwelle 10 in einer gemeinsamen vertikalen Ebene liegen. Die Gelenkwelle 10 ist auf der in Fahrtrichtung links liegenden Seite des Antriebsmotors 19 angeordnet. Das Tellerrad 12d des Vorderachsgetriebes 15 ist auf der dem Antriebsmotor 19 zugewandten - d.h. der in Fahrtrichtung rechten - Seite des Vorderachsgetriebes 15 angeordnet.

Es ist ersichtlich, dass die als Gelenkwelle 10 ausgeführte Seitenwelle gemäß Fig. 3 und Fig. 4 auch ohne Kreuzgelenke 35, 94 ausgestaltet sein könnte.

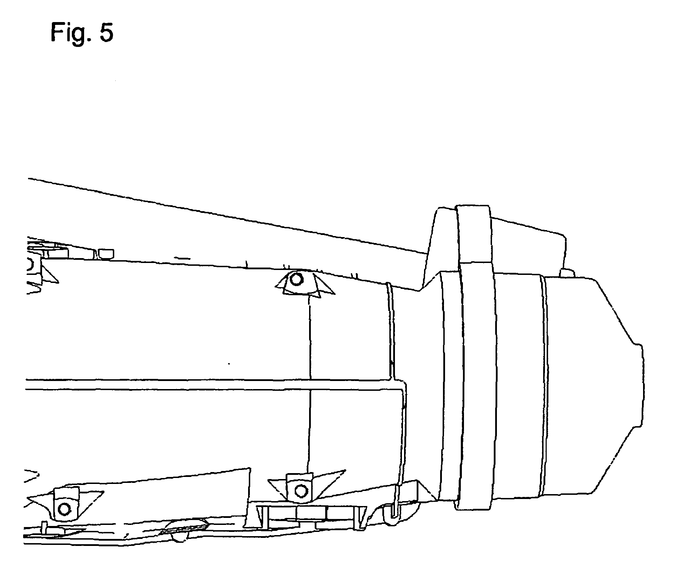

Fig. 5 zeigt eine Draufsicht auf einen Teilbereich des Allradantriebsstranges aus Fig. 3.

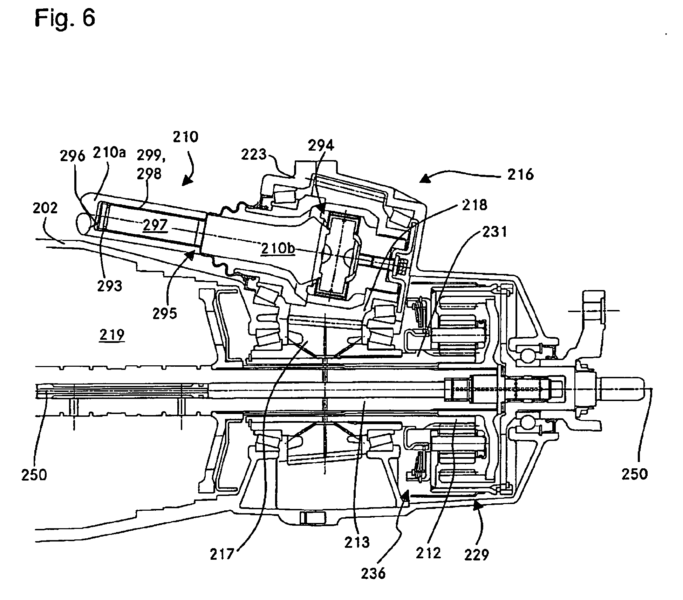

Fig. 6 zeigt in einer ersten detaillierten Ausgestaltungsform den Allrad-Antriebsstrang gemäß Fig. 3. Dabei sind die Bezugsziffern der entsprechenden Bauteile gegenüber denen der schematischen Darstellung der Fig. 3 um zweihundert erhöht.

Der Antriebsstrang weist neben einem Automatikgetriebe 219 eine im eingebauten Zustand zum Heck des Kraftfahrzeugs weisende Getriebeausgangswelle auf. Diese Getriebeausgangswelle bildet die Eingangswelle 213 des Differentialgetriebes 229.

Das Automatikgetriebe 219 besitzt ein Getriebegehäuse 202 mit einem angeformten Lagergehäuse 223 für einen Seitenabtrieb 216, so dass das Automatikgetriebe 219 kostengünstig nach einem sogenannten "add-on-Prinzip" für eine Allradvariante nutzbar ist.

Bei einer derartigen Variante ist die gegenüber der reinen Heckantriebsvariante verlängerte Getriebeausgangswelle bzw. Eingangswelle 213 über das Differentialgetriebe 229 und eine Heckantriebsgelenkwelle mit einer Ritzelwelle eines nicht näher dargestellten Hinterachsgetriebes derart verbunden, dass ein erster Teil des Antriebsmomentes auf das Hinterachsgetriebe übertragen wird. Ein zweiter Teil des Antriebsmomentes wird von der Eingangswelle 213 über
- das Differentialgetriebe 229,
- ein Antriebsritzel 217,
- ein Abtriebsritzel 218,
- eine Gelenkwelle 210 des Seitenabtriebs 216 und
- eine Kegelritzelwelle eines nicht näher dargestellten Vorderachsgetriebes
auf eine Vorderachse übertragen. Mittels des Differentialgetriebes 229 sind Abtriebsmomente auf das Vorderachsgetriebe und das Hinterachsgetriebe verteilbar sowie Drehzahldifferenzen ausgleichbar.

Die Gelenkwelle 210 des Seitenabtriebs 216 ist horizontal um einen Winkel von ca. 8° zur Antriebsstranglängsachse 250 verschwenkt. Die Gelenkwelle 210 des Seitenabtriebs 216 ist vertikal um einen Winkel von ca. 4° zur Antriebsstranglängsachse 250 verschwenkt.

Der Seitenabtrieb 216 wird von zwei Zahnrädern gebildet, und zwar von dem Antriebsritzel 217, und dem mit diesem kämmenden Abtriebsritzel 218. Das Antriebsritzel 217 ist drehfest mit einer Hohlwelle 231 verbunden, welche einteilig mit einem Sonnenrad 212 des Differentialgetriebes 229 ausgeführt ist. Innerhalb dieser Hohlwelle 231 verläuft die Eingangswelle 213. Das Abtriebsritzel 218 ist prinzipiell eine hohle, außenverzahnte Welle, welche mittels einer angestellten Kegelrollenlagerung in x-Anordnung in dem Lagergehäuse 223 gelagert ist.

Zur Herstellung des horizontalen Winkels und des nicht näher dargestellten vertikalen Winkels ist die Gelenkwelle 210 mittels eines Kreuzgelenkes gelenkig radial innerhalb des Abtriebsritzels 218 angeordnet. Ferner ist die Gelenkwelle 210 in Fahrtrichtung vorn - d.h. an deren anderem Ende - über ein weiteres Kreuzgelenk und einen nicht näher dargestellten zentrierten Flansch gelenkig an die nicht näher dargestellte Kegelritzelwelle des Vorderachsgetriebes gekoppelt.

Die Gelenkwelle 210 ist dabei zweigeteilt und umfasst den ersten Seitenwellenteil 210a und den zweiten Seitenwellenteil 210b. Der erste Seitenwellenteil 210a ist an dessen dem Seitenabtrieb 216 zugewandter Seite mit einer Sacklochbohrung versehen, so dass dieser teilweise als Hohlwelle ausgeführt ist. Diese Sacklochbohrung ist auf deren Innenseite mit einer axialen Innenverzahnung 299 versehen, welche in eine Außenverzahnung 298 eines in die Sacklochbohrung gesteckten Zapfens 297 des zweiten Wellenteils 210b eingreift. Die Außenverzahnung des Zapfens 297 erstreckt sich ausgehend von der Stirnfläche 296 fast über dessen gesamte Länge. Lediglich am Ende geht der Zapfen 297 über einen Freistich 295 und einen Absatz zu der einen Gelenkhälfte des Kreuzgelenkes 294 über.

In den Zapfen 297 ist kurz vor der Stirnfläche 296 eine Ringnut eingefräst, welche einen Axialsicherungsring 293 der Form DIN 9045 aufnimmt. Dieser Axialsicherungsring 293 ist vorgespannt, so dass dieser infolge dessen Streben nach Aufweitung an der Innenseite der Sachlochbohrung anliegt. Da der Axialsicherungsring 293 nur einseitig an den Zahnfüßen der Innenverzahnung 299 anliegt, ist eine begrenzte axiale Verschieblichkeit der beiden Wellenhälften 210a, 210b gegeneinander gewährleistet. Somit sind Wärmeausdehungen, toleranzbedingte Fertigungsstreuungen etc. ausgleichbar und eine einfache Montage/Demontage der Gelenkwelle 210 wird ermöglicht.

Bei der Getriebevorrichtung gemäß Fig. 6 sind das Antriebsritzel 217 und das mit diesem kämmende Abtriebsritzel 218 jeweils als kegeliges Stirnrad ausgeführt. Die Gelenkwelle 210 ist auf der in Fahrtrichtung rechts liegenden Seite des nicht näher dargestellten Antriebsmotors angeordnet.

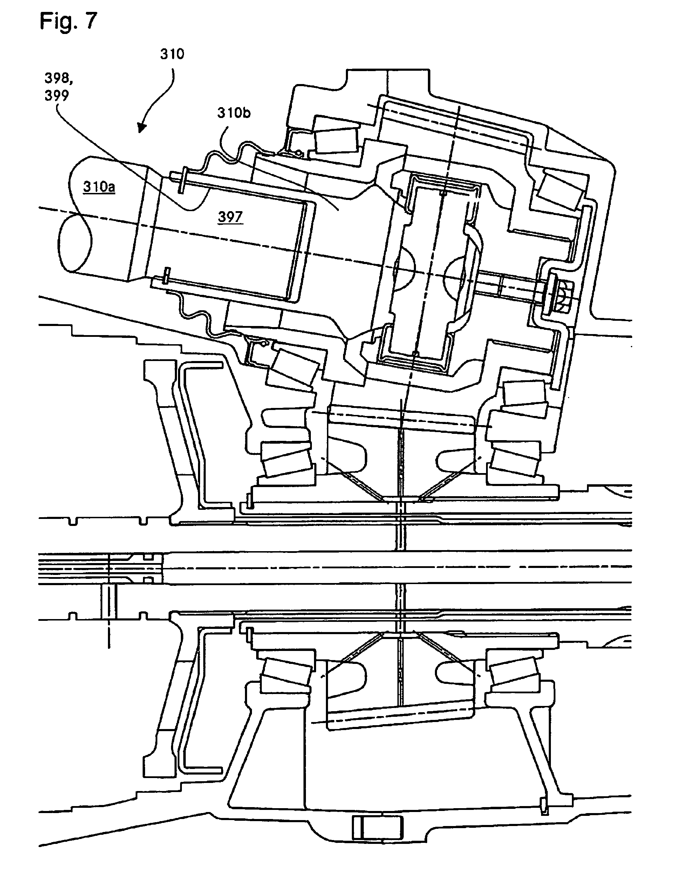

Fig. 7 zeigt in einer zweiten detaillierten Ausgestaltungsform den Allrad-Antriebsstrang gemäß Fig. 3, der aber nicht zur Erfindung gehört. Gegenüber der ersten detaillierten Ausgestaltungsform gemäß Fig. 6 ist die zweigeteilte Gelenkwelle 310 anders ausgestaltet. Ein erster Gelenkwellenteil 310a weist in der zweiten Ausgestaltungsform einen Zapfen 397 auf, welcher in eine Sachlochbohrung des zweiten Gelenkwellenteiles 310b gesteckt ist. Dabei greift eine Außenverzahnung 398 des Zapfens 397 in eine Innenverzahnung 399, welche in die Innenenwandung der Sacklochbohrung eingearbeitet ist. Am Fuß des Zapfens 397 bzw. an einem dem ersten Gelenkwellenteil 310a zugewanden Ende des zweiten Gelenkwellenteils 310b ist ein flacher Sicherungsring DIN 471, welcher die Verbindung zwischen den beiden Gelenkwellenteilen 310a und 310b herstellt, in zwei Ringnuten eingesetzt. Dabei weist der Zapfen 397 außenseitig die eine Ringnut auf. Diese eine Ringnut korrespondiert mit der anderen innenseitigen Ringnut des hohlwellenartig ausgestalteten Bereiches des zweiten Gelenkwellenteils 310b.

Bei den beschriebenen Ausführungsformen handelt es sich nur um beispielhafte Ausgestaltungen. Eine Kombination der beschriebenen Merkmale für unterschiedliche Ausführungsformen ist ebenfalls möglich. Weitere, insbesondere nicht beschriebene Merkmale der Vorrichtungsteile, sind den in den Zeichnungen dargestellten Geometrien der Vorrichtungsteile zu entnehmen.

## Patentansprüche

1. Längs eingebauter Antriebsstrang für ein Kraftfahrzeug, bei welchem mittels eines Verteilergetriebes (229) ein Antriebsmoment zum einen auf eine Hinterachse und zum anderen über eine winkelig zur Antriebsstranglängsachse (250) angeordnete geteilte Seitenwelle (210) auf ein Vorderachse übertragbar ist, wobei die Wellenteile (210a, 210b) der Seitenwelle (210) mittels einer Keilwellenverbindung (299, 298) miteinander verbundenen sind,
**dadurch gekennzeichnet,**
**dass** für die Keilwellenverbindung (299, 298) ein selbsttätig rastierender Axialsicherungsring (293) vorgesehen ist, welcher in einer Ringnut an dem dem ersten Wellenteil (210a) zugewandten einen axialen Ende des anderen Wellenteils (210b) angeordnet ist.

2. Längs eingebauter Antriebsstrang nach Patentanspruch 1,
**dadurch gekennzeichnet,**
**dass** die teilweise Antriebsmomentübertragung vom Verteilergetriebe (229) auf die Seitenwelle (210) ausschließlich über eine ein Antriebsritzel (217) und ein Abtriebsritzel (218) umfassende Zahnradpaarung erfolgt.

3. Längs eingebauter Antriebsstrang nach Patentanspruch 1,
**dadurch gekennzeichnet,**
**dass** der eine Wellenteil (210a bzw. 310b) der geteilten Seitenwelle als Hohlwelle mit einer Innenverzahnung (298 bzw. 398) der Keilwellenverbindung (299, 298) ausgeführt ist, welche in eine Außenverzahnung (299 bzw. 399) des anderen Wellenteils (210b bzw. 310a) eingreift.

4. Längs eingebauter Antriebsstrang nach einem der vorhergehenden Patentansprüche,
**dadurch gekennzeichnet,**
**dass** das Antriebsritzel (217) und das mit diesem kämmende Abtriebsritzel (218) jeweils als kegeliges Stirnrad ausgeführt sind.

5. Längs eingebauter Antriebsstrang nach Patentanspruch 4,
**dadurch gekennzeichnet,**
**dass** ein Achsenwinkel dieser kegeligen Stirnräder (217, 218) gleich einem horizontalen Winkel (β_{H}) ist, welcher zwischen der Antriebsstranglängsachse (250) und einer Seitenwellenlängsachse der Seitenwelle (210) aufgespannt wird.

6. Längs eingebauter Antriebsstrang nach Patentanspruch 5,
**dadurch gekennzeichnet,**
**dass** das Vorderachsgetriebe (215) als Kegelritzel-Tellerrad-Differential mit einem Achsenwinkel (α₁ bzw - α₂) ausgestaltet ist, welcher um einen horizontalen Winkel (β_{H}) kleiner als 90° ist, wobei der horizontalen Winkel (β_{H}) zwischen der Antriebsstranglängsachse (250) und einer Seitenwellenlängsachse der Seitenwelle (210) aufgespannt wird.

7. Längs eingebauter Antriebsstrang nach Patentanspruch 6,
**dadurch gekennzeichnet,**
**dass** die beiden Wellenhälften (210a, 219b bzw. 310a, 310b) ineinander steckbar sind.

8. Längs eingebauter Antriebsstrang nach einem der vorhergehenden Patentansprüche,
**dadurch gekennzeichnet,**
**dass** zwischen einem Seitenwellenteil (10a) der Seitenwelle (10) und einer Ritzelwelle (11) des Vorderachsgetriebes (15) eine zentrierende Verbindung vorgesehen ist.

## Claims

1. Longitudinally mounted drivetrain for a motor vehicle, in which a drive torque can be transmitted, by means of a power divider (229), both to a rear axle and via a split lateral shaft (210), which is arranged at an angle with respect to the drivetrain longitudinal axis (250), to a front axle, with the shaft parts (210a, 210b) of the lateral shaft (210) being connected to one another by means of a splined shaft connection (299, 298),
**characterized**
**in that** an automatically latching axial securing ring (293) is provided for the splined shaft connection (299, 298), which axial securing ring (293) is arranged in an annular groove at the one axial end, which faces towards the first shaft part (210a), of the other shaft part (210b).

2. Longitudinally mounted drivetrain according to Patent Claim 1,
**characterized**
**in that** the partial transmission of drive torque from the power divider (229) to the lateral shaft (210) takes place exclusively via a gearwheel pair which comprises a drive input pinion (217) and a drive output pinion (218).

3. Longitudinally mounted drivetrain according to Patent Claim 1,
**characterized**
**in that** the one shaft part (210a or 310b) of the split lateral shaft is designed as a hollow shaft with an internal toothing (298 or 398) of the splined shaft connection (299, 298), which internal toothing (298 or 398) engages into an external toothing (299 or 399) of the other shaft part (210b or 310a).

4. Longitudinally mounted drivetrain according to one of the preceding patent claims,
**characterized**
**in that** the drive input pinion (217) and the drive output pinion (218), which meshes with said drive input pinion (217), are designed in each case as a conical spur gear.

5. Longitudinally mounted drivetrain according to Patent Claim 4,
**characterized**
**in that** an axis angle of said conical spur gears (217, 218) is equal to a horizontal angle (β_{H}) which is spanned between the drivetrain longitudinal axis (250) and a lateral shaft longitudinal axis of the lateral shaft (210).

6. Longitudinally mounted drivetrain according to Patent Claim 5,
**characterized**
**in that** the front axle gearing (215) is embodied as a bevel-pinion/crown-wheel differential with an axis angle (α₁ or α₂) which is smaller than 90° by a horizontal angle (β_{H}), with the horizontal angle (β_{H}) being spanned between the drivetrain longitudinal axis (250) and a lateral shaft longitudinal axis of the lateral shaft (210).

7. Longitudinally mounted drivetrain according to Patent Claim 6,
**characterized**
**in that** the two shaft halves (210a, 219b or 310a, 310b) can be inserted into one another.

8. Longitudinally mounted drivetrain according to one of the preceding patent claims,
**characterized**
**in that** a centring connection is provided between a lateral shaft part (10a) of the lateral shaft (10) and a pinion shaft (11) of the front axle gearing (15).

## Revendications

1. Transmission montée longitudinalement pour un véhicule automobile, dans laquelle, au moyen d'une boîte de vitesses intermédiaire (229), un couple d'entraînement peut être transmis d'une part à un essieu arrière et d'autre part, par le biais d'un arbre latéral (210) divisé et disposé suivant un certain angle par rapport à l'axe longitudinal (250) de la transmission, à un essieu avant, les parties d'arbre (210a, 210b) de l'arbre latéral (210) étant connectées l'une à l'autre au moyen d'un accouplement à cannelures (299, 298),
**caractérisée en ce que**
pour l'accouplement à cannelures (299, 298), on prévoit une bague de fixation axiale (293) s'emboîtant automatiquement, qui est disposée dans une rainure annulaire à l'extrémité axiale tournée vers la première partie d'arbre (210a) de l'autre partie d'arbre (210b).

2. Transmission montée longitudinalement selon la revendication 1,
**caractérisée en ce que**
le transfert de couple d'entraînement partiel de la boîte de vitesses intermédiaire (229) à l'arbre latéral (210) s'effectue exclusivement par le biais d'une paire de roues dentées comprenant un pignon d'entraînement (217) et un pignon de sortie (218).

3. Transmission montée longitudinalement selon la revendication 1,
**caractérisée en ce que**
l'une des parties d'arbre (210a ou 310b) de l'arbre latéral divisé est réalisée sous forme d'arbre creux avec une denture interne (298 ou 398) de l'accouplement à cannelures (299, 298), qui vient en prise dans une denture externe (299 ou 399) de l'autre partie d'arbre (210b ou 310a).

4. Transmission montée longitudinalement selon l'une quelconque des revendications précédentes,
**caractérisée en ce que**
le pignon d'entraînement (217) et le pignon de sortie (218) s'engrenant avec lui sont tous deux réalisés sous forme de pignons droits coniques.

5. Transmission montée longitudinalement selon la revendication 4,
**caractérisée en ce que**
un angle d'axe de ces pignons droits coniques (217, 218) est égal à un angle horizontal (β_{H}) qui est formé entre l'axe longitudinal (250) de la transmission et un axe longitudinal de l'arbre latéral (210).

6. Transmission montée longitudinalement selon la revendication 5,
**caractérisée en ce que**
la boîte de vitesses de l'essieu avant (215) est configurée sous forme de différentiel à pignon conique et couronne avec un angle d'axe (α₁ ou α₂) qui est inférieur d'un angle horizontal (β_{H}) à 90°, l'angle horizontal (β_{H}) étant formé entre l'axe longitudinal (250) de la transmission et un axe longitudinal de l'arbre latéral (210).

7. Transmission montée longitudinalement selon la revendication 6,
**caractérisée en ce que**
les deux moitiés d'arbre (210a, 210b ou 310a, 310b) peuvent être enfoncées l'une dans l'autre.

8. Transmission montée longitudinalement selon l'une quelconque des revendications précédentes,
**caractérisée en ce que**
l'on prévoit une connexion de centrage entre une partie d'arbre latéral (10a) de l'arbre latéral (10) et un arbre à pignon (11) de la boîte de vitesses de l'essieu avant (15).
